# EUROPEAN PATENT APPLICATION

(11) **EP 4 609 936 A1**
(43) Date of publication of application: **03.09.2025**
(21) Application number: 24160141.8
(22) Date of filing: 28.02.2024
(51) Int. Cl.: B01D 53/04, B01D 53/26, B60H 1/00

(54) **SORPTION FILTER CARTRIDGE AND SORPTION FILTER ELEMENT**

(71) Applicant: MANN+HUMMEL GmbH, 71636 Ludwigsburg (DE)
(72) Inventor: JESSBERGER, Thomas, 71636 Ludwigsburg (DE); WELLER, Benedikt, 71636 Ludwigsburg (DE); EVLEKLI, Coskun, 71636 Ludwigsburg (DE)
(74) Representative: Mann + Hummel Intellectual Property

(57) **Abstract**

A sorption filter cartridge (19, 20) for a sorption filter element (18) includes a fluid permeable housing (27), a heater system (36) enclosed by the housing (27), and a plurality of housing rooms (40, 41, 42, 43) being enclosed by the housing (27) and being at least partly separated from each other by the heater system (36), each of the plurality of housing rooms (40, 41, 42, 43) receiving a granulate portion (44) including at least one sorbent (8, 9).

## Description

### Technical Field

The present invention relates to a sorption filter cartridge for a sorption filter element and to a sorption filter element including such a sorption filter cartridge.

### Background Art

In the case of vehicles that are at least partially electrically powered, it is advisable to save as much energy as possible in order to achieve the longest possible range. For reasons of comfort, the passenger compartment of such a vehicle can usually be air conditioned with the aid of an air conditioning system. With regard to the desired energy savings, it is advantageous if the air conditioning system for air conditioning the passenger compartment draws in as little fresh air as possible from the vehicle's surroundings and heats or cools it, but instead recirculates and air conditions the air in the passenger compartment.

In the aforementioned recirculation mode for air conditioning the passenger compartment, however, water contained in the exhaled air of occupants or passengers can accumulate in the passenger compartment, which can lead to fogging of windows, for example a windshield or side windows, of the motor vehicle. The reason for this is that the dehumidifying effect of an air conditioning system, which results from a dew point undershoot in the evaporator heat exchanger, cannot be used during the recirculation mode. This must be avoided or at least reduced with regard to safety aspects.

Furthermore, carbon dioxide contained in the exhaled air can also accumulate in the passenger compartment. This can lead to concentration problems or even health problems for the occupants. This, too, must be prevented or at least reduced with regard to both safety and health aspects, since in the worst-case scenario, an excessively high concentration of carbon dioxide in the passenger compartment air can reduce the driver's ability to concentrate to such an extent that accidents are imminent.

### Summary

It is therefore an object of the invention to provide an improved sorption filter cartridge for a sorption filter element.

Accordingly, a sorption filter cartridge for a sorption filter element is provided. The sorption filter cartridge includes a fluid permeable housing, a heater system being enclosed by the housing, and a plurality of housing rooms being enclosed by the housing and being at least partly separated from each other by the heater system, each of the plurality of housing rooms receiving a granulate portion including at least one sorbent.

The sorption filter cartridge is particularly suitable for adsorbing and/or absorbing carbon dioxide and water. However, also substances like nitrogen oxides (NOX) and/or volatile organic compounds (VOCs) can be adsorbed and/or absorbed by the sorption filter cartridge. Examples of volatile organic compounds are higher hydrocarbons. The sorption filter cartridge may also be suitable for adsorbing and/or absorbing sulfur dioxide (S02).

In the present context, "sorption" refers to processes that lead to an enrichment of a substance, for example carbon dioxide or water, within a phase or on an interface between two phases. Accumulation within a phase is referred to as absorption, while accumulation at the interface is referred to as adsorption. In the present context, "desorption" refers to processes in which atoms or molecules, in particular carbon dioxide or water, leave the surface of a solid. Desorption thus generally represents the reverse process of sorption. By applying heat to the sorbent, the adsorbed and/or absorbed substances can be released from the sorbent.

In a sorption mode, the sorption filter cartridge adsorbs and/or absorbs different substances like carbon dioxide and/or water. In a desorption mode, the enriched substances can be released from the sorption filter cartridge. Thus, the sorption filter cartridge can be regenerated. In the desorption mode, heat is applied to the housing rooms, in particular to the sorbent. The sorption filter cartridge may be a pure adsorption filter cartridge or may be designated as such. Preferably, the sorption filter cartridge can be easily and quickly replaced. The sorption mode may also be, or be designated as, a pure adsorption mode. The desorption mode may also be referred to as regeneration mode.

The sorption filter cartridge preferably includes several sorbents. In particular, a sorbent suitable to sorb, especially to adsorb, carbon dioxide may be provided. This sorbent may be referred to as carbon dioxide sorbent or CO2 sorbent. Another sorbent may be provided that is suitable to sorb, especially adsorb, water. This sorbent may be referred to as water sorbent or H2O sorbent. The sorbents may be in granular or fibrous form, in particular in bulk form and/or provided within a plurality of bags. The sorbents may also be pure adsorbents or be designated as such. Raw air may be guided through the sorbents.

In the desorption mode, regeneration air can be taken from an enclosed air volume or from an environment. Initially, the regeneration air is unloaded. In the desorption mode, the unloaded regeneration air is loaded with carbon dioxide and water and supplied to the environment as loaded regeneration air. By the fact that the regeneration air is "unloaded" with carbon dioxide and water, it is to be understood in particular that the regeneration air can absorb stored carbon dioxide and water in the sorption filter cartridge being in desorption mode. However, this does not preclude the unloaded regeneration air from also being able to absorb a certain amount of carbon dioxide and water. However, the unloaded regeneration air is not saturated with carbon dioxide and water.

In the desorption mode, the sorbent or sorbents is heated at least partly using the heater system by means of a direct contact with the heater system. Furthermore, the regeneration air is heated by means of convection directly by the heater system and/or by the heated sorbent or sorbents. Note, that the sorbent or sorbents can be heated at least partly indirectly by means of convection by the heated regeneration air. By the fact, that the regeneration air is heated, the saturation with carbon dioxide and water is lowered or delayed, respectively. Thus, the regeneration air can absorb carbon dioxide and water contained within the sorbent or sorbents, thus enabling the desorption of the sorbent or sorbents.

The housing encloses an inner space or interior which includes the heater system and the sorbent or sorbents. In other words, the heater system is at least partly surrounded by the sorbent or sorbents. This way, the interior of the housing is at least partially divided into the plurality of separated housing rooms by the heater system. The interior of the housing being at least partially divided into the plurality of separated housing rooms in this context means, that adjacent housing rooms are preferably not in contact with each other over the whole surfaces with which the housing rooms are facing one another. Instead, adjacent housing rooms can be in contact with each other concerning a reduced surface area. For example, the heater system separates at least 20%, 30%, 40%, 50%, 60%, 70% or 75% and not more than 95%, 90% or 80% of the area of the surfaces with which the housing rooms are facing one another. As a result, a contact surface between the housing system and the sorbent or sorbents is maximized. Alternatively, adjacent housing rooms can be completely separated from each other by the heater system. This way, adjacent housing rooms are not in contact with each other at all. The number of housing rooms is arbitrary. For example, there are provided four housing rooms. The housing rooms can receive all the same sorbent or the same sorbents or different sorbents. The housing rooms being "separated" in this context means that preferably, the sorbent or the sorbents cannot move from one housing room into another.

The housing being "fluid permeable" in this context means that a fluid, in particular air, can be guided through the housing so that the air comes into contact with the sorbent or the sorbents. For this purpose, the housing can at least partly be designed lattice-shaped or grid-shaped.

Due to the separated housing rooms, it is possible to provide different types of sorbents in different housing rooms. This allows the sorption filter cartridge to be adapted to different applications. By arranging the heater system inside the interior of the housing, the heater system is at least in vicinity or in direct contact with the sorbent or sorbents. Thus, the sorbent or sorbents are heated faster while requiring less energy. Less heat is lost bypassing the sorbent or sorbents. In addition, the sorbent or sorbents can be preheated. In this context, to preheat the sorbent or sorbents has to be understood as heating the sorbent or sorbents by the heater system without or before the regeneration air is provided to the sorption filter cartridge. In case a plurality of the sorption filter cartridges is installed within the sorption filter element with the plurality of the sorption filter cartridges being active in an alternating manner, the sorbent or sorbents within one of the plurality of sorption filter cartridges can be preheated while a respective other one of the plurality of sorption filter cartridges is active and flown through by the regeneration air. This way, the temperature of the regeneration air leaving the sorption filter element can be kept more constant.

In embodiments, the heater system includes at least one heater element in a shape of a plate, the at least one heater element being permanently or releasably attached to the housing and penetrating the housing. The at least one heater element at least partly separates housing rooms from each other. Preferably, each of the at least one heater element at least partly separates exactly two housing rooms from each other. The number of heater elements is arbitrary. For example, there are provided three heater elements that at least partially separate four housing rooms from each other. The at least one heater element can be designed in the shape of a thin plate. That means, that the at least one heater element is characterized by one of its three main dimensions being significantly smaller than the other two main dimensions. Preferably, the at least one heater element is designed in the shape of a rectangle which is span by the two bigger main dimensions. Yet, it can also be designed in the shape of a bar, a grid, or a loop. The at least one heater element can be an integral part of the housing. Alternatively, the at least one heater element and the housing can be separate parts. In the latter case, the at least one heater element can be welded, glued, or mechanically fixed to the housing. There can also be provided at least one slit into which the at least one heater element is pushed to attach the at least one heater element to the housing. It is possible, that the at least one heater element penetrates the housing. That means in the present context, that the at least one heater element extends from the interior of the housing through at least one wall encasing the housing and to the exterior of the housing.

In embodiments, the heater system further includes a base plate being is permanently or releasably attached to the housing, and the at least one heater element is permanently or releasably attached to the base plate. Thus, in case the heater system includes more than one heater element, the heater system can be designed as one piece, enhancing the stability of the heater system. In addition, multiple heater elements can be heated by the same heat source. In case the at least one heater element is permanently attached to the base plate, said components can be connected via welding, a bolt connection or other connection means. Otherwise, the heater element can be pushed into a slit of the base plate and fixed by means of a frictional connection.

In embodiments, the heater system is configured to heat the granulate portion within each of the plurality of the housing rooms simultaneously. To do so, the whole heater system is heated simultaneously, hence, accelerating the heating of the sorbent or sorbents and, consequently, easing and accelerating the execution of the desorption mode. Alternatively, the sorbent or sorbents within the plurality of housing rooms is not heated simultaneously but in an alternating manner. The latter case may be beneficial in case different sorbents for different tasks are used. For example, in a first step, the sorbent for water can be heated, followed by heating the sorbent for CO2. Thus, the different sorbents may be heated more precisely.

In embodiments, the housing includes a housing body and a housing cover configured to close the housing body by snapping into the housing body to connect the housing cover to the housing body. "Snapped" in this context means that the housing cover is at least partially deformed to engage with the housing body in a form-locking way. The housing body and the housing cover are preferably injection molded plastic parts. The housing body is preferably box-shaped. Preferably, the housing cover includes a sealing lip.

In embodiments, the heater system is releasably or permanently attached to the housing body and/or to the housing cover. The heater system can be releasably or permanently attached to the housing body. Alternatively, the heater system can be attached to the housing cover. It is also feasible that the heater system is partly attached to the housing body and partly attached to the housing cover. For example, at least one heater element can be attached to the housing cover while at least one heater element can be attached to the housing body.

In embodiments, the housing body includes a fluid permeable bottom grid arranged at a housing bottom of the housing body, and a shortest dimension of the at least one heater element is parallel to a plane of the housing bottom. The housing body can include a mesh-shaped or grid-shaped housing bottom. The housing bottom is fluid permeable. That means that a fluid, in particular air, can be guided through the housing bottom. The housing bottom can represent the biggest wall of the housing body regarding its surface size. Alternatively, a fluid permeable grid can be arranged at all walls of the housing body. The shortest dimension of the at least one heater element represents the very direction in space, along which the at least one heater element shows its shortest length. When attached to the housing, said direction is oriented parallel to a plane which is span by two biggest dimensions of the housing bottom. Thus, one of the biggest surfaces of the housing bottom is located within said plane. In other words, two biggest surfaces of the at least one heater element are oriented perpendicular to the plane which is span by the housing bottom.

In embodiments, the housing cover includes flexible snap hooks configured to engage with a frame section of the housing body for connecting the housing cover to the housing body. The number of snap hooks is arbitrary. For example, there are provided four snap hooks per housing cover. The snap hooks can be elastically deformed. When pressing the housing cover on the housing body, the snap hooks engage with the frame section and snap into or behind the frame section. By deforming the snap hooks, the housing cover can be separated from the housing body.

In embodiments, the granulate portion is received exchangeably by one of the plurality of housing rooms. Exchangeable means that each granulate portion of the sorbent or sorbents can be removed from the housing. The sorbent or sorbents are not attached permanently to the housing. This way, the sorbent or sorbents can be renewed, for example after a specific time of usage. To enable said exchange of the sorbent or sorbents, the housing can be opened, for example by removing the housing cover from the housing body. Hence, the sorbent or sorbents can be replaced without the need to replace the whole sorption filter cartridge, saving costs. Preferably, the granulate portion within a specific one of the housing rooms can be replaced independently from the other granulate portions and/or the granulate portions within all housing rooms can be replaced simultaneously.

In embodiments, the granulate portion is provided loose in a form of bulk material and/or enclosed within at least one bag. In case the granulate portions are provided as bulk material, the sorbent or different sorbents can be poured into the housing rooms to form a granulate portion in each housing room. Each housing room receives a separate granulate portion. In case each of the granulate portions is provided within at least one bag, the at least one bag includes at least a portion of one of the granulate portions. Each housing room receives at least one bag to form a granulate portion within that housing room. The number of bags within each housing room is arbitrary. For example, each housing room can receive 1, 2, 3 or 4 bags to form a granulate portion in the housing room. Each of the bags can be exchanged separately. For example, only a specific one of the bags within a specific one of the housing rooms can be exchanged. Alternatively or additionally, all bags can be exchanged simultaneously. The at least one bag can also be referred to as a package. In the present context, the term "bag" has to be understood as a portion of sorbent of sorbents contained within a shell. Said shell can be made of a soft material or a solid material. For example, the shell can be designed as a woven material. The bag is fluid permeably. Preferably, substantially the whole volume of each housing room is filled by a granulate portion. Each granulate portion can include a first sorbent, a second sorbent or the first sorbent as well as the second sorbent. However, the number of sorbents is arbitrary. In the case that the granulate portions include both, the first sorbent and the second sorbent, the sorbents can be mixed. Alternatively, the sorbents can be arranged in layers within the respective granulate portion.

In embodiments, the sorption filter cartridge further includes at least one electrical contact configured to transfer electrical energy to the heater system, particularly the at least one electrical contact including a contact bar, a plug and/or a socket. The heater system may be provided with electrical energy from the motor vehicle and/or from an external power source. In order to provide the electrical energy to the heater system, the electrical contact can be connected to other components of the motor vehicle and/or to an external power source. Preferably, the electrical contact is connected by mounting the sorption filter cartridge into the sorption filter element, for example by means of a contact bar. Alternatively, the electrical contact can be connected after mounting the sorption filter cartridge, for example by means of a plug and/or a socket. The electrical contact transfers said electrical energy to the heater system. Preferably, the received electrical energy is converted to heat within the at least one heater element.

In embodiments, the sorption filter cartridge further includes at least one sensor configured to measure any one or any combination of a temperature, a humidity, and an air flow velocity within the sorption filter cartridge. The sensor can also be used to measure the portion of CO2 in the air and/or other values, as well. The sensor can be permanently integrated or releasable connected to the housing. The sensor can be used to determine the amount of water and/or CO2 loaded within the sorbent or sorbents. Thus, the sensor can be used to determine when the sorption filter cartridge has to be switched from sorption mode to desorption mode and vice versa.

Furthermore, a sorption filter element is provided. The sorption filter element includes a mounting frame, and at least one of the sorption filter cartridge as explained before, the at least one of the sorption filter cartridge being releasably mounted to the mounting frame. Preferably, the sorption filter element includes a first sorption filter cartridge and a second sorption filter cartridge. Preferably, while the first sorption filter cartridge is in sorption mode, the second sorption filter cartridge is in desorption mode and vice versa. "Releasably mounted" in this context means that the sorption filter cartridges can be mounted to and demounted from the mounting frame without damaging the sorption filter cartridges and/or the mounting frame. Preferably, the mounting frame is an injection molded plastic part.

In embodiments, the mounting frame includes a first cartridge receiving section configured to receive a first sorption filter cartridge among the at least one of the sorption filter cartridge, and a second cartridge receiving section configured to receive a second sorption filter cartridge among the at least one of the sorption filter cartridge. Preferably, the cartridge receiving sections are designed identical. That means that the first sorption filter cartridge can be received in the second cartridge receiving section and the second sorption filter cartridge can be received in the first cartridge receiving section and vice versa. The afore-mentioned sealing lip of the housing cover lies against a sealing surface of the respective cartridge receiving section.

In embodiments, the first sorption filter cartridge and the second sorption filter cartridge are arranged in a V-configuration within the first cartridge receiving section and the second cartridge receiving section, respectively. "V-configuration" in this context means that the sorption filter cartridges are positioned inclined to each other and thus form a V-shape.

### Brief Description of Drawings

Fig. 1 is a schematic view of one embodiment of a motor vehicle.
Fig. 2 is a schematic view of one embodiment of a mechanism for the motor vehicle according to Fig. 1.
Fig. 3 is a schematic perspective view of one embodiment of a sorption filter element with two sorption filter cartridges for the mechanism according to Fig. 2.
Fig. 4 is a cross-sectional view of the sorption filter element according to Fig. 3.
Fig. 5 is a schematic perspective view of one embodiment of a housing body of the sorption filter cartridge according to Fig. 3.
Fig. 6 is a further schematic perspective view of the housing body with an embodiment of a heater system of the sorption filter cartridge according to Fig. 3.
Fig. 7 is a cross-sectional view of the sorption filter cartridge according to Fig. 3.
Fig. 8 is a cross-sectional view of a second embodiment of the sorption filter cartridge according to Fig. 3.

In the figures, identical or functionally identical elements have been given the same reference signs unless otherwise indicated.

### Description of Embodiments

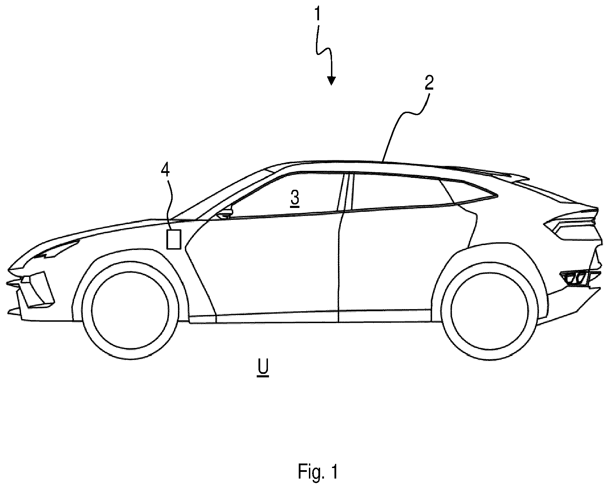

Fig. 1 shows a schematic view of an embodiment of a motor vehicle 1. The motor vehicle 1 is preferably an electric vehicle or a hybrid vehicle. However, the motor vehicle 1 may also be driven by means of an internal combustion engine. The motor vehicle 1 includes a body 2 which encloses an enclosed air volume 3. "Enclosed" in this context means that the body 2 defines boundaries or a geometric extension of the enclosed air volume 3. However, this does not necessarily mean that the enclosed air volume 3 cannot be in air exchange with an environment U of the motor vehicle 1.

The enclosed air volume 3 is an interior or passenger compartment of the motor vehicle 1. However, the enclosed air volume 3 may also be associated with a watercraft, a construction machine or a construction vehicle, a rail vehicle, an agricultural machine or an agricultural vehicle, or an aircraft. However, the enclosed air volume 3 may also be part of a building or a stationary machine.

In the following, however, it is assumed that the enclosed air volume 3 is the passenger compartment of the motor vehicle 1. Therefore, the enclosed air volume 3 is hereinafter referred to as the passenger compartment. The passenger compartment 3 can be air conditioned by means of a heating, ventilation, and air conditioning (HVAC) system 4. To extend a range of such an electrically driven motor vehicle 1, it is desirable to save as much energy as possible. With reference to the HVAC system 4, this means that it should draw in as little fresh air as possible from the environment U of the motor vehicle 1 to air condition the passenger compartment 3.

However, when recirculated air taken in the passenger compartment 3 is used to air condition the passenger compartment 3, water (H2O) contained in the exhaled air of occupants or passengers may accumulate in the passenger compartment 3, which may cause windows, for example a windshield or side windows, of the motor vehicle 1 to fog. This must be avoided or at least reduced with regard to safety aspects. Furthermore, carbon dioxide (CO2) contained in the exhaled air can also accumulate in the passenger compartment 3. This can lead to concentration problems or even health impairments for the occupants. This, too, must be prevented or at least reduced with regard to both safety and health aspects.

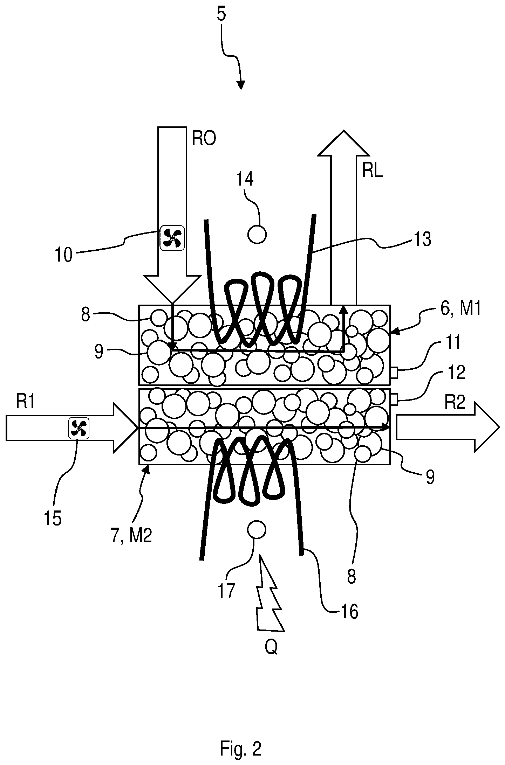

Fig. 2 shows a schematic view of an embodiment of a mechanism 5 for the combined reduction of CO2 and H2O, in particular water vapor, within the passenger compartment 3. The mechanism 5 is part of the HVAC system 4. With the aid of the mechanism 5, the previously mentioned disadvantages can be prevented or their effect at least reduced. In addition, the mechanism 5 can also be used to prevent impurities from the environment U from entering the passenger compartment 3, since the preparation of the circulating air means that the intake of ambient air can be largely dispensed with.

The mechanism 5 includes a first sorption filter device 6 and a second sorption filter device 7. "Sorption" is a collective term for processes that lead to an accumulation of a substance within a phase or at an interface between two phases. The enrichment within a phase is more precisely called absorption, and that at the interface adsorption. This means that the sorption filter devices 6, 7 are suitable for adsorbing and/or absorbing substances such as CO2 and H2O, but also nitrogen oxides (NOX) and/or volatile organic compounds (VOCs). Examples of volatile organic compounds are higher hydrocarbons. The sorption filter devices 6, 7 may also be suitable for adsorbing and/or absorbing sulfur dioxide (SO2). Preferably, however, the sorption filter devices 6, 7 are pure adsorbing units or may be designated as such.

The sorption filter devices 6, 7 are preferably interchangeable and, as will be explained further below, can be operated alternately in a sorption mode M1 and in a desorption mode M2. The sorption filter devices 6, 7 are cartridge-shaped and may be referred to as cartridges or sorption filter elements. The sorption mode M1 may also be referred to as the adsorption mode. The desorption mode M2 may also be referred to as regeneration mode. That is, the first sorption filter device 6 is in the sorption mode M1 when the second sorption filter device 7 is in the desorption mode M2 and vice versa. Thus, both sorption filter devices 6, 7 are never in the same mode M1, M2 at the same time. Preferably, the sorption filter devices 6, 7 each have a cartridge shape so that they can be easily exchanged.

Each sorption filter device 6, 7 includes a first sorbent 8 and a second sorbent 9. Preferably, the sorbents 8, 9 are adsorbents or can be designated as such. For example, the first sorbent 8 is suitable for adsorbing CO2. Accordingly, the second sorbent 9 may be suitable to adsorb H2O. The two sorbents 8, 9 may thus remove H2O and CO2 from the passenger compartment 3. The first sorbent 8 is illustrated with small circles. The second sorbent 9 is illustrated with large circles. Other sorbents may also be provided, suitable for sorbing NOX or VOCs, for example. Thus, any number of different sorbents 8, 9 can be provided for processing the circulating air in the passenger compartment 3.

For example, in addition to the sorbents 8, 9, at least one further sorbent or also several further sorbents (not shown) are provided which are suitable for removing fine particles, NOx and/or VOCs from raw air RO. The further sorbents may be introduced between two carrier layers, in particular carrier layers made of a nonwoven fabric. Alternatively, the sorbents 8, 9 and the further sorbents may be mixed together. The further sorbents may include activated carbon which, in particular in the form of a bulk, is preferably introduced between the two carrier layers. The further sorbent or sorbents may be mixed with the first sorbent 8 and/or with the second sorbent 9 to build up one or more mixed bulk layers.

Furthermore, the sorption filter devices 6, 7 can also be suitable for removing allergens, bacteria and/or viruses from the raw air RO in addition to CO2 and H2O. This can be done by a functional coating of carrier materials, for example nonwovens, or by a functional coating of the sorbents 8, 9. Furthermore, the sorption filter devices 6, 7 can have at least one fragrance component from a comfort aspect.

The sorbents 8, 9 can each be in the form of spherical granules. Preferably, the sorbents 8, 9 are fixed to a carrier material or are fixed with the aid of a carrier material.

In Fig. 2, the first sorption filter device 6 is in the previously mentioned sorption mode M1. The second sorption filter device 7 is in the desorption mode M2. In the sorption mode M1, raw air RO loaded with CO2 and H2O from the passenger compartment 3 is fed to the first sorption filter device 6. A first blower 10 may be provided for this purpose. The raw air RO is passed through the first sorption filter device 6 at least in sections, with the sorbents 8, 9 purifying the raw air RO of CO2 and H2O. The purified raw air RO is fed back to the passenger compartment 3 as clean air RL.

The first sorption filter device 6 can have a temperature sensor 11. However, the first sorption filter device 6 can include a plurality of temperature sensors 11. For example, there can be provided two temperature sensors 11. The second sorption filter device 7 can also have a temperature sensor 12. However, the second sorption filter device 7 can include a plurality of temperature sensors 12. For example, there can be provided two temperature sensors 12.

A first heater 13 is assigned to the first sorption filter device 6, with the aid of which heat Q can be supplied to the sorbents 8, 9. In the sorption mode M1, the first heater 13 is inactive, so that it does not supply heat Q to the first sorption filter device 6. The first heater 13 can be a heating wire and/or a heating plate passed through the first sorption filter device 6, which is energized using electrical energy E to introduce heat Q and thus heats the sorbents 8, 9. However, heat Q may also be introduced by any other means. For example, heat Q may be waste heat from an electric motor used to drive the motor vehicle 1. Heat Q may also be waste heat from a conventional internal combustion engine, a battery cooling system, or a fuel cell cooling circuit. The first heater 13 may also be a heat exchanger or include a heat exchanger. A temperature sensor 14 can be assigned to the first heater 13.

In the desorption mode M2, unloaded regeneration air R1 is supplied to the second sorption filter device 7 being loaded with CO2 and H2O. A second blower 15 can be used for this purpose. By the fact that the unloaded regeneration air R1 is "unloaded" with CO2 and H2O, it is to be understood that the unloaded regeneration air R1 can absorb CO2 and H2O stored in the second sorption filter device 7. That is, the unloaded regeneration air R1 may also have some content of CO2 and H2O. However, the unloaded regeneration air R1 is not saturated with CO2 and H2O. The unloaded regeneration air R1 can be taken from the passenger compartment 3 or the environment U, for example.

Furthermore, a second heater 16 is provided, by means of which the second sorption filter device 7 is heated in the desorption mode M2 and thus heat Q is introduced into the second sorption filter device 7. The first heater 13 and the second heater 16 are preferably of identical construction and are operated alternately. As previously mentioned, heat Q may also be supplied, for example, in the form of waste heat from an electric motor. However, as also mentioned previously, heat Q may also be waste heat from a conventional internal combustion engine, a battery cooling system or a fuel cell cooling circuit. The second heater 16 may also be a heat exchanger or include a heat exchanger. A temperature sensor 17 can be assigned to the first heater 13.

The first heater 13 and the second heater 16 are designed identical. In the following, only the first heater 13 will be referred to. However, all explanations concerning the first heater 13 can be applied to the second heater 16 an vice versa.

When the sorbents 8, 9 are heated in the desorption mode M2 of the second sorption filter device 7, they release CO2 and H2O to the unloaded regeneration air R1. In other words, CO2 and H2O are desorbed. A temperature above 55 °C is preferably required for desorption. The unloaded regeneration air R1 is passed through the second sorption filter device 7, absorbs CO2 and H2O there and is discharged from the second sorption filter device 7 as loaded regeneration air R2. In particular, the loaded regeneration air R2 is supplied to the environment U.

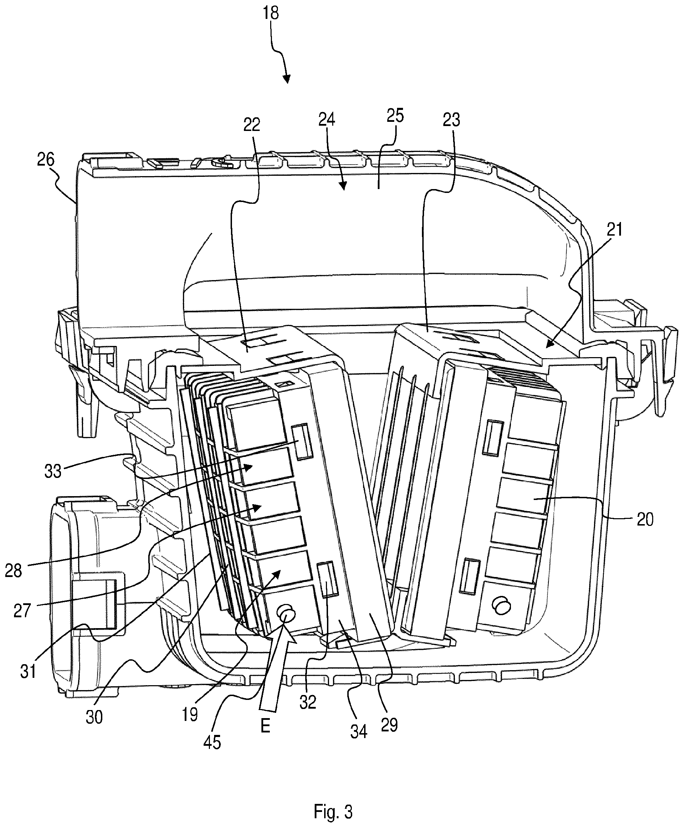

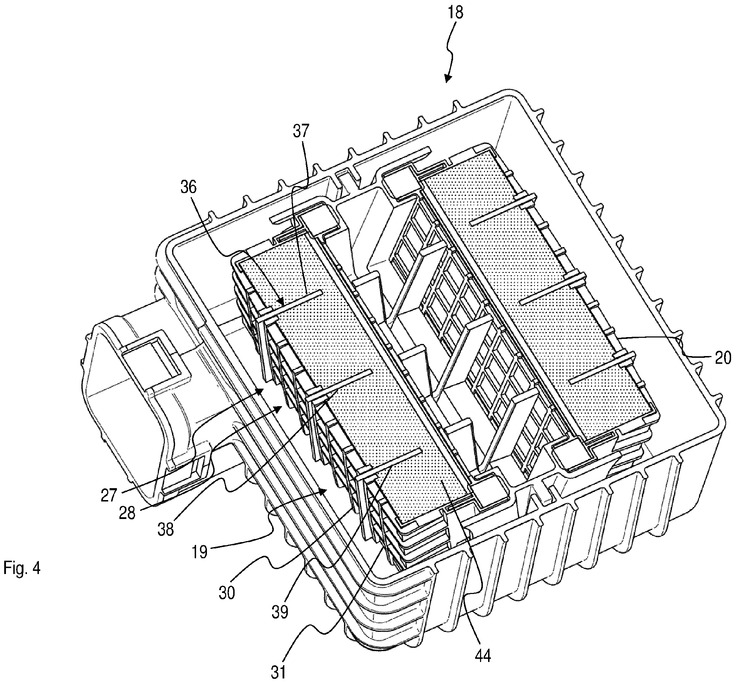

Fig. 3 shows a schematic perspective view of one embodiment of a sorption filter element 18. Fig. 4 shows a cross-sectional view of the sorption filter element 18. In the following, Figs. 3 and 4 will be referred to at the same time.

The sorption filter devices 6, 7 are designed identical. Each sorption filter device 6, 7 includes a sorption filter element 18. In the following, only the first sorption filter device 6 will be referred to. However, all explanations concerning the first sorption filter device 6 can be applied to the second sorption filter device 7 and vice versa.

The first sorption filter device 6 receives the sorption filter element 18. The sorption filter element 18 can be removed from the housing and put again into the housing. The sorption filter element 18 includes a first sorption filter cartridge 19 and a second sorption filter cartridge 20. The sorption filter cartridges 19, 20 can be named sorption boxes, in particular adsorption boxes.

The sorption filter cartridges 19, 20 are removably attached to a mounting frame 21 of the sorption filter element 18. The mounting frame 21 preferably is an injection molded plastic part. The mounting frame 21 includes two cartridge receiving sections 22, 23 for receiving the sorption filter cartridges 19, 20. A first cartridge receiving section 22 and a second cartridge receiving section 23 are provided. Each sorption filter cartridge 19, 20 is assigned to one of the cartridge receiving sections 22, 23. The sorption filter cartridges 19, 20 are exchangeable and can be removed from the cartridge receiving sections 22, 23. When mounted within the cartridge receiving sections 22, 23, the first sorption filter cartridge 19 and the second sorption filter cartridge 20 are arranged in a V-configuration.

The sorption filter element 18 includes an air guidance element 24 which is preferably an injection molded plastic part. The air guidance element 24 includes an air diffusor 25. The air diffusor 25 is fluid permeable. Regeneration air R1, R2, clean air RL and/or raw air RO can be inserted at an inlet 26 of the air guidance element 24 and guided through the air diffusor 25. The air diffusor 25 distributes the regeneration air R1, R2, the clean air RL and/or the raw air RO to the sorption filter cartridges 19, 20.

The sorption filter cartridges 19, 20 are designed identical. In the following, only a first sorption filter cartridge 19 will be referred to. However, all explanations concerning the first sorption filter cartridge 19 can be applied to a second sorption filter cartridge 20 and vice versa. In the following, the first sorption filter cartridge 19 is generally named sorption filter cartridge.

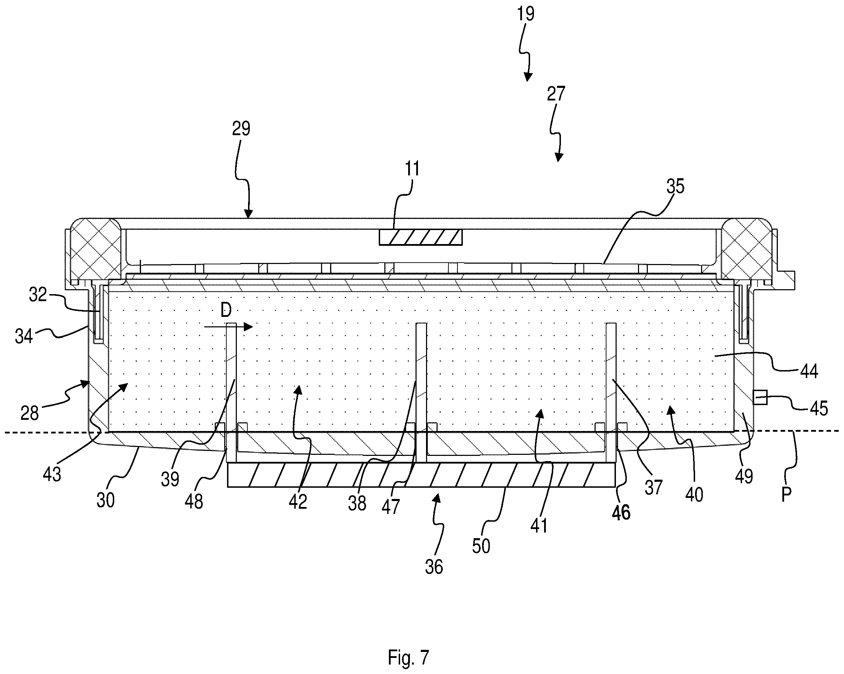

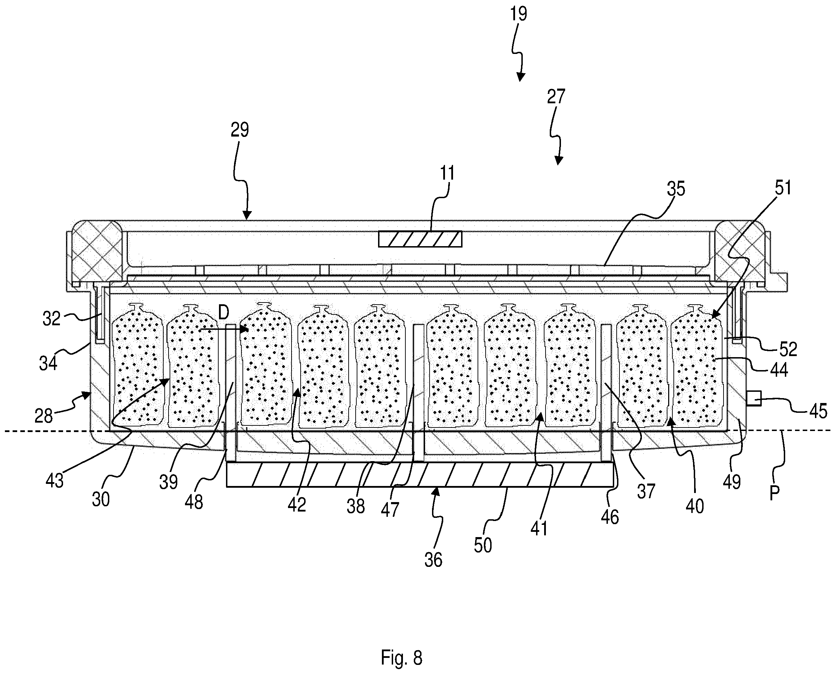

The sorption filter cartridge 19 includes a housing 27. The housing 27 includes a housing body 28 and a housing cover 29 that is attached to the housing body 28. The housing body 28 and the housing cover 29 are preferably injection molded plastic parts. The housing body 28 is box-shaped and includes a housing bottom 30. The housing bottom 30 includes a bottom grid 31 which is fluid permeable. That means that regeneration air R1, R2, clean air RL and/or raw air RO can be guided through the housing bottom 30. The temperature sensor 11 can be integrated into the sorption filter cartridge 19. Preferably, the temperature sensor 11 attached to the housing cover 29 Figs. 7 and 8).

The housing cover includes flexible snap hooks 32, 33. The number of snap hooks 32, 33 is arbitrary. For example, there are provided four snap hooks 32, 33 per sorption filter cartridge 19. The snap hooks 32, 33 engage with a frame section 34 of the housing body 28 to attach the housing cover 29 to the housing body 28.

The housing cover 29 includes a flexible cover grid 35 (Figs. 7 and 8) that is fluid permeable. That means that regeneration air R1, R2, clean air RL and/or raw air RO can be guided through the cover grid 35.

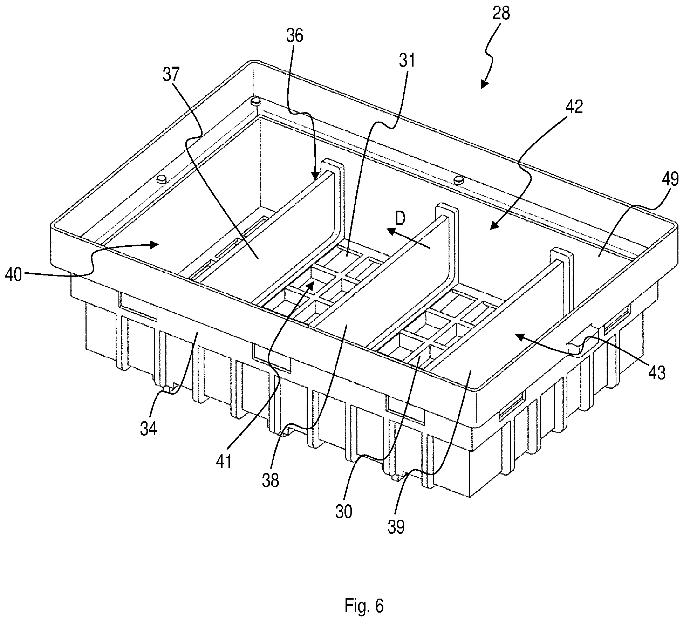

The sorption filter cartridge 19 further includes a heater system 36 (Fig. 4). The first heater 13 and the second heater 16 can be identical to the heater system 36. The heater system 36 includes a plurality of heater elements 37, 38, 39 in the shape of thin plates. The number of heater elements 37, 38, 39 is arbitrary. For example, there are provided three heater elements 37, 38, 39. The heater elements 37, 38, 39 can be part of the housing body 28. Alternatively, the heater elements 37, 38, 39 and the housing body 28 can be separate parts. The heater elements 37, 38, 39 can be welded or glued to the housing body 28. The heater elements 37, 38, 39 partly separate a plurality of separate housing rooms 40, 41, 42, 43 from each other (Fig. 6, 7, 8). Hence, the housing rooms 40, 41, 42, 43 are in contact with each other with respect to a limited contact surface.

Each housing room 40, 41, 42, 43 receives a granulate portion 44 (Fig. 4). Each housing room 40, 41, 42, 43 receives a separate granulate portion 44. Each granulate portion 44 can include the first sorbent 8, the second sorbent 9 or the first sorbent 8 as well as the second sorbent 9. In the case that the granulate portions 44 include both, the first sorbent 8 and the second sorbent 9, the sorbents 8, 9 can be mixed. Alternatively, the sorbents 8, 9 can be arranged in layers within the respective granulate portion 44.

The granulate portions 44 are provided as bulk material. To assemble the sorption filter cartridge 19, the granulate portions 44 are placed in the housing rooms 40, 41, 42, 43 by filling bulk material into the housing rooms 40, 41, 42, 43 in such a way, that the granulate portions 44 fill substantially the whole volume of the housing rooms 40, 41, 42, 43. In particular, the granulate portions 44 are in direct contact with the heater elements 37, 38, 39. Then, the housing cover 29 is attached to the housing body 28. When assembling the housing cover 29 and the housing body 28, the snap hooks 32, 33 are elastically deformed and engage with the frame section 34 of the housing body 28. The snap hooks 32, 33 snap behind the frame section 34 to connect the housing body 28 and the housing cover 29.

In the sorption mode M1, raw air RO loaded with CO2 and H2O from the passenger compartment 3 is fed to the first sorption filter device 6. The raw air RO is passed through the first sorption filter device 6 and thus through the sorption filter element 18 with the two sorption filter cartridges 19, 20. The purified raw air RO is fed back to the passenger compartment 3 as clean air RL.

In the desorption mode M2, the heater system 36 receives electrical energy E from the motor vehicle 1 and/or an external power source and transforms it into heat Q. Then, the heat Q increases the temperature of the granulate portions 44 with the first sorbent 8 and the second sorbent 9 within the housing 27. The heater system 36 is designed to heat the granulate portions 44 within the housing 27. Hereby, the heater system 36 is designed to heat the granulate portion 44 within each of the housing rooms 40, 41, 42, 43 simultaneously. The electrical energy E is provided to the heater system 36 via an electrical contact 45. The electrical contact 45 is designed in the shape of a socket. Other means to design the electrical contact 45 are feasible, as well, for example a plug and/or a contact bar.

Furthermore, in the desorption mode M2, unloaded regeneration air R1 is supplied to the first sorption filter device 6. The unloaded regeneration air R1 enters at the inlet 26 and passes the air guidance element 24 which distributes the unloaded regeneration air R1 between the two sorption filter cartridges 19, 20. Inside the two sorption filter cartridges 19, 20, the unloaded regeneration air R1 passes the granulate portions 44 and/or the heater system 36 which apply heat Q to the unloaded regeneration air R1. The unloaded regeneration air R1 passes through the sorption filter element 18 with the two sorption filter cartridges 19, 20 and leaves the first sorption filter device 6 as loaded regeneration air R2. The same functionality applies to the second sorption filter device 7.

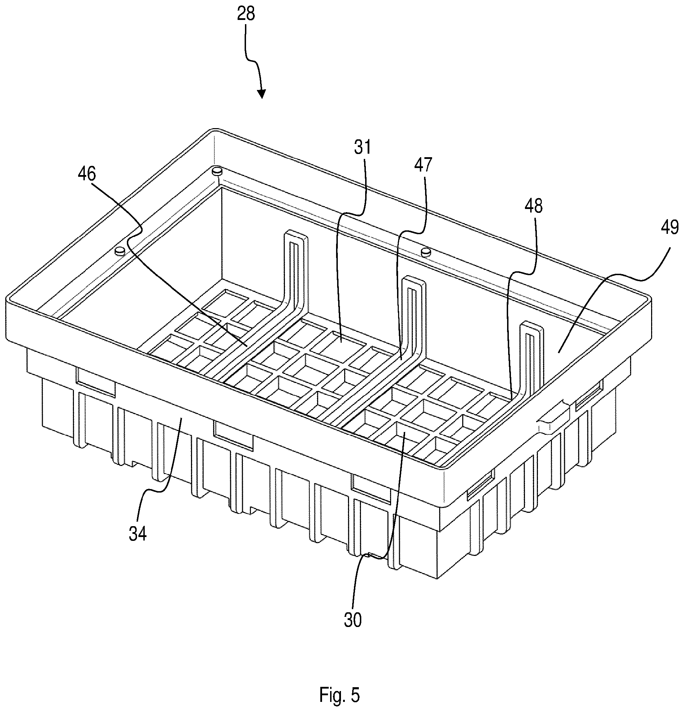

Fig. 5 shows a schematic perspective view of one embodiment of the housing body 28 of the sorption filter cartridge 19. Fig. 6 shows a schematic perspective views of the housing body 28 with an embodiment of the heater system 36. Fig. 7 shows a cross-sectional view of one embodiment of the sorption filter cartridge 19. In the following, Figs. 5 to 7 will be referred to at the same time.

The housing bottom 30 includes a plurality of heater receiving slits 46, 47, 48 (Figs. 5, 7, 8). The number of heater receiving slits 46, 47, 48 corresponds to the number of heater elements 37, 38, 39 (Figs. 6, 7, 8). Each of the heater receiving slits 46, 47, 48 can be box-shaped. Each of the heater elements 37, 38, 39 is received by one of the heater receiving slits 46, 47, 48. Therefore, the heater elements 37, 38, 39 can be pushed into and pulled out of the heater receiving slits 46, 47, 48 like a drawer. Each heater receiving slit 46, 47, 48 includes two side walls between which one of the heater elements 37, 38, 39 is placed. In other words, the heater elements 37, 38, 39 are penetrating the housing bottom 30. The heater receiving slits 46, 47, 48 can be a part of the housing bottom 30 only. Alternatively, the heater receiving slits 46, 47, 48 can extent to side walls 49 of the housing body 28 of which only one is assigned with a reference sign. Thus, the heater receiving slits 46, 47, 48 can be a part of the side walls 49, as well.

Each heater element 37, 38, 39 is designed in the shape of a thin plate which is characterized by three lengths being oriented perpendicular to each other. The heater elements 37, 38, 39 include a smallest dimension D (Figs. 6, 7, 8) which is oriented along the smallest of the three lengths of the heater elements 37, 38, 39. When assembled, the smallest dimension D of each heater element 37, 38, 39 is oriented parallel to a plane P (Figs. 7, 8). The plane P is oriented parallel to the housing bottom 30. In other words, the heater elements 37, 38, 39 are substantially oriented perpendicular to the housing bottom 30.

The heater system 36 includes a base plate 50 (Fig. 7) onto which the heater elements 37, 38, 39 are attached to by means of welding. Other means of attachment are feasible, as well, like gluing or connecting with screws. The base plate 50 is illustrated to be located outside the housing 27. Nonetheless, other locations are feasible, as well, like inside the housing 27.

Fig. 7 illustrates that the granulate portions 44 fill the whole volume within the housing 27. That means that the granulate portions 44 reach the housing bottom 30, the side walls 49, the heater system 36, and the housing cover 29.

The electrical contact 45 (Fig. 7) is attached to the side wall 49 of the housing body 28.

Fig. 8 shows a cross-sectional view of a second embodiment of the sorption filter cartridge 19.

In contrast to the first embodiment of the sorption filter cartridge 19, the second embodiment of the sorption filter cartridge 19 does not receive granulate portions 44 in the form of bulk material. Instead, each granulate portion 44 is formed by at least one bag 51 of which only one is assigned with a reference sign in Fig. 8. The other aspects of the first embodiment of the sorption filter cartridge 19 are valid for the second embodiment of the sorption filter cartridge 19, as well.

Each of the bags 51 includes a shell 52 which contains the first sorbent 8 and the second sorbent 9. The shell 52 can be made of a soft and flexible material which is fluid permeable. The number of bags 51 is arbitrary. In addition, for example in case the volumes of the housing rooms 40, 41, 42, 43 differ from each other, the number of bags 51 within each of the housing rooms 40, 41, 42, 43 can differ, as well. For example, two smaller housing rooms 40, 43 can receive two bags 51 each while two bigger housing rooms 41, 42 can receive three bags 51 each. The at least one bag 51 within each of the housing rooms 40, 41, 42, 43 fills substantially the whole volume of the specific housing room 40, 41, 42, 43. Note, that the illustration of the bag 51 in Fig. 8 is schematical and does not necessarily represent the size and shape of the bag 51. Each of the bags 51 can be removed from the housing 27 and exchanged separately.

### Reference Signs List

- 1: Motor vehicle
- 2: Body
- 3: Volume/passenger compartment
- 4: HVAC system
- 5: Mechanism
- 6: Sorption filter device
- 7: Sorption filter device
- 8: Sorbent
- 9: Sorbent
- 10: Blower
- 11: Temperature sensor
- 12: Temperature sensor
- 13: Heater
- 14: Temperature sensor
- 15: Blower
- 16: Heater
- 17: Temperature sensor
- 18: Sorption filter element
- 19: Sorption filter cartridge
- 20: Sorption filter cartridge
- 21: Mounting frame
- 22: Cartridge receiving section
- 23: Cartridge receiving section
- 24: Air guidance element
- 25: Air diffusor
- 26: Inlet
- 27: Housing
- 28: Housing body
- 29: Housing cover
- 30: Housing bottom
- 31: Bottom grid
- 32: Flexible snap hook
- 33: Flexible snap hook
- 34: Frame section
- 35: Cover grid
- 36: Heater system
- 37: Heater element
- 38: Heater element
- 39: Heater element
- 40: Housing room
- 41: Housing room
- 42: Housing room
- 43: Housing room
- 44: Granulate portion
- 45: Electrical contact
- 46: Heater receiving slit
- 47: Heater receiving slit
- 48: Heater receiving slit
- 49: Side wall
- 50: Base plate
- 51: Bag
- 52: Shell

- D: Dimension
- E: Electrical energy
- M1: Sorption mode
- M2: Desorption mode
- Q: Heat
- R1: Regeneration air
- R2: Regeneration air
- RL: Clean air
- RO: Raw air
- U: Environment

## Claims

1. A sorption filter cartridge (19, 20) for a sorption filter element (18), the sorption filter cartridge (19, 20) comprising:
a fluid permeable housing (27);
a heater system (36) being enclosed by the housing (27); and
a plurality of housing rooms (40, 41, 42, 43) being enclosed by the housing (27) and being at least partly separated from each other by the heater system (36), each of the plurality of housing rooms (40, 41, 42, 43) receiving a granulate portion (44) comprising at least one sorbent (8, 9).

2. The sorption filter cartridge (19, 20) according to claim 1, wherein the heater system (36) comprises at least one heater element (37, 38, 39) in a shape of a plate, the at least one heater element (37, 38, 39) being permanently or releasably attached to the housing (27) and penetrating the housing (27).

3. The sorption filter cartridge (19, 20) according to claim 2, wherein the heater system (36) further comprises a base plate (50) being permanently or releasably attached to the housing (27), and
wherein the at least one heater element (37, 38, 39) is permanently or releasably attached to the base plate (50).

4. The sorption filter cartridge (19, 20) according to one of claims 1 to 3, wherein the heater system (36) is configured to heat the granulate portion (44) within each of the plurality of the housing rooms (40, 41, 42, 43) simultaneously.

5. The sorption filter cartridge (19, 20) according to one of claims 1 to 4, wherein the housing (27) comprises a housing body (28) and a housing cover (29) configured to close the housing body (28) by snapping into the housing body (28) to connect the housing cover (29) to the housing body (28).

6. The sorption filter cartridge (19, 20) according to claim 5, wherein the heater system (36) is releasably or permanently attached to the housing body (28) and/or to the housing cover (29).

7. The sorption filter cartridge (19, 20) according to claim 5 or 6, wherein the housing body (28) comprises a fluid permeable bottom grid (31) arranged at a housing bottom (30) of the housing body (28), and
wherein a shortest dimension (D) of the at least one heater element (37, 38, 39) is parallel to a plane (P) of the housing bottom (30).

8. The sorption filter cartridge (19, 20) according to one of claims 5 to 7, wherein the housing cover (29) comprises flexible snap hooks (32, 33) configured to engage with a frame section (34) of the housing body (28) to connect the housing cover (29) to the housing body (28).

9. The sorption filter cartridge (19, 20) according to one of claims 1 to 8, wherein the granulate portion (44) is received exchangeably by one of the plurality of housing rooms (40, 41, 42, 43).

10. The sorption filter cartridge (19, 20) according to one of claims 1 to 9, wherein the granulate portion (44) is provided loose in a form of bulk material and/or enclosed within at least one bag (51).

11. The sorption filter cartridge (19, 20) according to one of claims 1 to 10, further comprising at least one electrical contact (45) configured to transfer electrical energy (E) to the heater system (36).

12. The sorption filter cartridge (19, 20) according to one of claims 1 to 11, further comprising at least one sensor (11) configured to measure any one or any combination of a temperature, a humidity, and an air flow velocity within the sorption filter cartridge (19, 20).

13. A sorption filter element (18), comprising:
a mounting frame (21); and
at least one of the sorption filter cartridge (19, 20) according to one of claims 1 to 12, the at least one of the sorption filter cartridge (19, 20) being releasably mounted to the mounting frame (21).

14. The sorption filter element (18) according to claim 13, wherein the mounting frame (21) comprises:
a first cartridge receiving section (22) configured to receive a first sorption filter cartridge (19) among the at least one of the sorption filter cartridge (19, 20); and
a second cartridge receiving section (23) configured to receive a second sorption filter cartridge (20) among the at least one of the sorption filter cartridge (19, 20).

15. The sorption filter element (18) according to claim 14, wherein the first sorption filter cartridge (19) and the second sorption filter cartridge (20) are arranged in a V-configuration within the first cartridge receiving section (22) and the second cartridge receiving section (23), respectively.
